# EUROPEAN PATENT SPECIFICATION

(11) **EP 4 712 323 B1**
(45) Date of publication and mention of the grant of the patent: **28.10.2026**
(21) Application number: 24200133.7
(22) Date of filing: 13.09.2024
(51) Int. Cl.: H02M 1/00, H02M 1/32, H02M 1/42, H02M 7/06

(54) **POWER FACTOR CORRECTION INTEGRATED CIRCUIT WITH OVERVOLTAGE PROTECTION**
INTEGRIERTE LEISTUNGSFAKTORKORREKTURSCHALTUNG MIT ÜBERSPANNUNGSSCHUTZ
CIRCUIT INTÉGRÉ DE CORRECTION DE FACTEUR DE PUISSANCE AVEC PROTECTION CONTRE LES SURTENSIONS

(43) Date of publication of application: 18.03.2026
(73) Proprietor: Tridonic GmbH & Co. KG, 6851 Dornbirn (AT)
(72) Inventor: Schneider, Miguel Philipp, 6851 Dornbirn (AT); Romano, Fabio, 6851 Dornbirn (AT)
(74) Representative: Rupp, Christian

(56) References cited:
- US-A1- 2018 034 380
- "Power Factor Correction (PFC) Handbook", 30 April 2014 (2014-04-30), XP055221388, Retrieved from the Internet <URL:http://www.onsemi.com/pub/Collateral/HBD853-D.PDF> [retrieved on 20151015]

## Description

### TECHNICAL FIELD

The present invention relates to power factor correction (PFC) integrated circuits (ICs), and more particularly, to PFC ICs incorporating mains voltage monitoring and protection mechanisms. The invention provides a solution for PFC ICs that allows the existing undervoltage protection mechanism to be extended for overvoltage protection.

### BACKGROUND

PFC ICs are widely used in electronic systems to enhance power efficiency and maintain power quality. These ICs typically include internal circuitry to monitor the input voltage from the driver and feature undervoltage protection mechanisms. Such mechanisms prevent the IC from turning on if the input voltage is below a specified threshold (Brownin) or shut down the IC when the voltage drops too low during operation (Brownout).

In certain operational environments, such as high-power industrial applications, there is a risk of abnormal input voltage conditions, including both undervoltage and overvoltage. Overvoltage events, such as those caused by incorrect wiring of three-phase systems or other electrical faults, can damage the IC or the surrounding circuitry (PFC and following stages). Consequently, it is essential to develop systems that not only protect against undervoltage conditions but also safeguard the PFC against overvoltage of the input voltage, typically the rectified mains voltage.

US 2018/034380 A1 discloses an integrated circuit used for a switching converter that has a power supply circuit for providing a power supply voltage, and a control circuit. "Power Factor Correction (PFC) Handbook", 30 April 2014, discloses an output over-voltage protection circuit.

### SUMMARY

The present invention addresses the need for overvoltage protection in PFC ICs by providing an additional circuit that adapts the IC's existing undervoltage protection mechanism to additionally handle overvoltage conditions. This additional circuit ensures that when an overvoltage condition is detected, it triggers the same protective shutdown mechanism used for undervoltage events, thereby safeguarding the IC and the connected system.

According to a first aspect of the invention, a PFC circuit for a LED driver is provided. Said PFC circuit comprises an integrated control circuit arranged to maintain a constant output voltage of the PFC circuit by controlling at least one switch of the PFC circuit. Said integrated control circuit is provided with an input pin supplied with a signal representing the amplitude of an AC supply voltage supplied to input terminals of the PFC circuit. Said integrated control circuit is further configured to stop the operation of the least one switch when said signal falls below a preset minimum threshold value. Further, said PFC circuit comprises a signal adaptation circuit. Said signal adaptation circuit is supplied with the signal representing the amplitude of the AC supply voltage and arranged to modify the signal supplied to the input pin such that it falls below said minimum threshold value when the amplitude of the AC supply voltage exceeds a predetermined maximum value.

In this configuration, the PFC circuit is able to monitor the signal at the VIN pin to detect whether the amplitude of the AC supply voltage exceeds a predetermined maximum value. The voltage level may be compared against an internal threshold for overvoltage conditions. When the input voltage exceeds the safe operating range, the signal adaptation circuit intervenes by modifying the signal, in particular, it pulls the signal at the VIN pin below the preset minimum threshold, simulating a Brownout condition, even though the actual fault is overvoltage.

This implementation is advantageous as it allows the system to use the existing undervoltage protection mechanism to handle both under- and overvoltage conditions without additional complex modifications to the IC's internal circuitry.

According to an implementation form of the first aspect of the invention, the signal adaptation circuit comprises a further switch arranged to pull the signal at the input pin to a voltage below the minimum threshold voltage when the amplitude of the AC supply voltage exceeds the predetermined maximum value.

Advantageously, in this configuration, the switch actively intervenes when an overvoltage condition is detected by forcing the input signal to a value that the integrated control circuit interprets as a Brownout condition, triggering a fault shutdown.

According to an implementation form of the first aspect of the invention, the signal adaptation circuit further comprises at least one, preferably a plurality of Zener diode(s) arranged between a node where the signal representing the amplitude of the AC voltage is present and the control terminal of the further switch.

The Zener diode(s) act as voltage threshold detectors, designed to conduct when the AC supply voltage reaches the predetermined maximum value. By placing one or more Zener diodes in the circuit, precise control over the activation point of the overvoltage protection is achieved, ensuring reliable protection across different voltage levels. Advantageously, multiple Zener diodes may be used to provide added flexibility in fine-tuning the overvoltage threshold, depending on the system requirements.

According to an implementation form of the first aspect of the invention, the switch is a transistor, preferably a field-effect transistor (FET), being switched conducting when the at least one Zener diode breaks through, and arranged to pull the voltage at the input pin to a ground potential.

In this implementation, the transistor acts as the key switching element that responds to the overvoltage condition. Once the Zener diode breaks through at the specified voltage, the transistor (preferably a FET due to its fast switching and low resistance) pulls the input signal to ground. This immediately forces the voltage at the input pin below the minimum threshold, triggering the same Brownout fault shutdown mechanism used for undervoltage conditions. The use of a FET transistor is advantageous for its efficient, low-loss switching characteristics, making it ideal for high-frequency PFC applications.

According to an implementation form of the first aspect of the invention, the PFC circuit is a boost PFC circuit.

A boost PFC circuit is widely used in LED drivers and power supplies to increase input voltage while maintaining power factor correction. The invention enhances protection in these circuits by managing overvoltage effectively with a signal adaptation circuit, ensuring the system is safeguarded against both low and high voltages. This improves reliability and extends the life of components connected to the PFC circuit.

According to a second aspect of the invention, a LED driver is provided. Said LED driver comprises a PFC circuit according to the first aspect of the invention or any of its implementation forms, respectively.

Advantageously, this configuration allows the LED driver to benefit from enhanced protection against both undervoltage and overvoltage conditions. By integrating the signal adaptation circuit into the PFC circuit, the LED driver can efficiently prevent damage caused by electrical faults, such as overvoltage due to miswiring or power surges, without adding significant cost or complexity to the overall design. This protection ensures reliable and stable operation of the LED driver, extending the operational life of the LED lighting system.

According to a third aspect of the invention, a LED based luminaire is provided. Said LED based luminaire comprises a LED driver according to the second aspect of the invention.

By incorporating a LED driver with integrated overvoltage protection into the luminaire, the entire lighting system benefits from improved durability and resilience to fluctuations in supply voltage.

According to a fourth aspect of the invention, a method for an overvoltage protection of a PFC circuit of a LED driver is provided. Said method comprises the steps of:
- receiving a signal representing the amplitude of an AC supply voltage supplied to input terminals of the PFC circuit at an input pin of an integrated control circuit,
- monitoring the signal at the input pin to detect whether the amplitude of the AC supply voltage exceeds a predetermined maximum value,
- modifying the signal representing the amplitude of the AC supply voltage using a signal adaptation circuit, such that when the amplitude of the AC supply voltage exceeds the predetermined maximum value, the signal supplied to the input pin falls below a preset minimum threshold value, and
- stopping the operation of at least one switch in the PFC circuit when the signal supplied to the input pin falls below the preset minimum threshold value, thereby triggering overvoltage protection.

Advantageously, the method provides a simple and efficient solution for managing overvoltage conditions in LED drivers. By utilizing the same signal input and fault detection mechanism for both undervoltage and overvoltage protection, the method minimizes additional hardware requirements while ensuring robust protection for the LED driver. This leads to improved system reliability and extended operational life for LED-based luminaires, particularly in environments with unstable or fluctuating power supplies.

### DETAILED DESCRIPTION OF EMBODIMENTS

Exemplary embodiments of the invention are now further explained with respect to the drawings by way of example only, and not for limitation. In the drawings:
- Fig. 1: shows an existing PFC circuit.
- Fig. 2: shows an exemplary circuit of the proposed PFC circuit.
- Fig. 3: shows an exemplary circuit of the proposed signal adaptation circuit.
- Fig. 4: shows behavior of key voltages of the PCF circuit in an experiment.
- Fig. 5: shows a method according to an embodiment of the present invention.

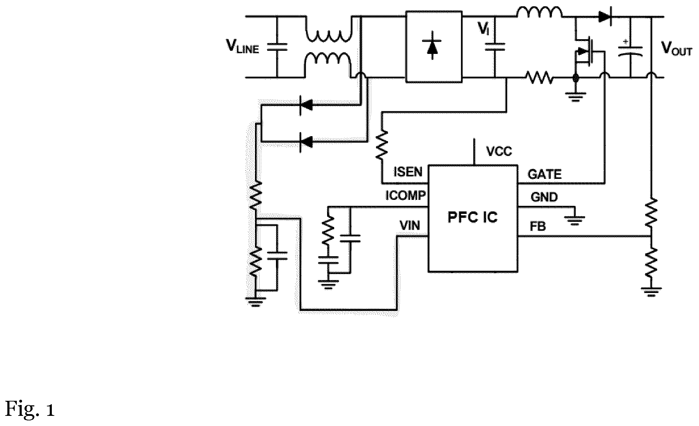

Referring to Fig. 1, a PFC circuit is shown, which represents an existing solution aimed at preventing undervoltage conditions in an LED driver system. The PFC IC is responsible for controlling the input voltage from the V_{LINE} and maintaining a stable output voltage V_{OUT} through its internal regulation mechanisms.

In existing analog PFC ICs, the Brownin and Brownout thresholds are typically fixed by internal circuits. For example, the Brownin threshold might be set at VBI = 0.4V, while the Brownout threshold is typically set at VBO = 0.3V. These values are used by the PFC IC to determine when to start up (Brownin) or shut down (Brownout) based on the sensed mains voltage. To match these internal threshold values with the actual AC supply voltage, an external voltage divider is employed. This divider scales the AC voltage to the appropriate level for the PFC IC's internal protection circuitry.

For instance, in a typical application, a Brownin threshold of 177VAC is desired. To achieve this, the voltage divider is carefully dimensioned so that the signal at the VIN pin of the PFC IC corresponds to 0.4V when the input AC voltage is 177VAC. Similarly, the Brownout protection would be triggered when the scaled voltage drops to 0.3V, representing a specific lower limit of the AC voltage.

In this existing setup depicted in Fig. 1, a voltage divider connected to V_{LINE} is used to scale the mains voltage and supply a proportionate signal to the V_{IN} pin of the PFC IC. The PFC IC monitors this signal, and if the input voltage drops below the preset Brownout threshold (VBO), the IC triggers a fault shutdown, stopping the operation of the switching device (typically a MOSFET). This protects the system from operating under low voltage conditions, which can lead to inefficient power factor correction or potential damage to the components.

However, this solution does not address overvoltage protection. In case of an overvoltage event, the circuit lacks the necessary components to detect and respond appropriately, leaving the system vulnerable to damage caused by excessive input voltage. To overcome this limitation, the present invention proposes an improvement to the PFC circuit by incorporating a signal adaptation circuit that allows the existing undervoltage protection mechanism to handle overvoltage conditions as well.

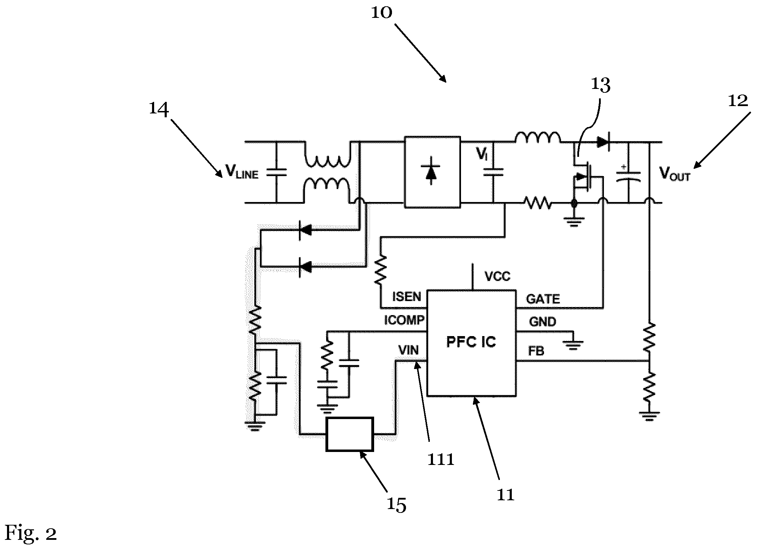

Fig. 2 illustrates a circuit diagram of an exemplary embodiment of a PFC circuit 10 for a LED driver.

In accordance with Fig. 2, the PFC circuit 10 comprises: an integrated control circuit 11 arranged to maintain a constant output voltage 12 of the PFC circuit 10 by controlling at least one switch 13 of the PFC circuit 10.

The integrated control circuit 11 is provided with an input pin 111 (VIN) supplied with a signal representing the amplitude of an AC supply voltage supplied to input terminals 14 of the PFC circuit 10.

The integrated control circuit 11 is configured to stop the operation of the least one switch 13 when said signal falls below a preset minimum threshold value.

Referring to Fig. 2, the PFC circuit of Fig. 1 has been modified to include a signal adaptation circuit 15, which extends the functionality of the existing input voltage sensing to handle both undervoltage and overvoltage conditions.

The signal adaptation circuit 15 is supplied with said signal representing the amplitude of the AC supply voltage and arranged to modify the signal supplied to the input pin 111 such that it falls below said minimum threshold value when the amplitude of the AC supply voltage exceeds a predetermined maximum value.

It can be seen that the new signal adaptation circuit 15 is inserted between the voltage divider and the VIN pin of the PFC IC. This circuit is designed to modify the input signal based on the amplitude of the AC supply voltage.

When the input voltage is within a normal operating range, the signal adaptation circuit 15 allows the scaled-down signal from the voltage divider to pass through to the VIN pin without interference.

When the input voltage exceeds a predetermined maximum value (indicating an overvoltage condition), the signal adaptation circuit 15 intervenes by pulling the signal supplied to the VIN pin below the preset minimum threshold value (VBO), triggering the fault shutdown mechanism in the same way the PFC IC would respond to an undervoltage condition (Brownout).

It may be understood that under normal conditions, where the input AC voltage is between the undervoltage and overvoltage thresholds, the signal adaptation circuit 15 allows the scaled signal from the voltage divider to pass through unmodified to the VIN pin. The PFC IC 11 controls the switch 13 to maintain a constant, regulated output voltage.

If the AC supply voltage drops below a predefined value, the signal from the voltage divider at the VIN pin falls below the Brownout threshold (VBO). The PFC IC 11 then shuts down the switch 13 to prevent damage caused by operating at too low of a voltage.

When the AC supply voltage exceeds a predetermined maximum safe value, the signal adaptation circuit 15 activates, manipulating the signal at the VIN pin to drop below the Brownout threshold (even though the actual input voltage is too high, not too low). This triggers the same shutdown mechanism in the PFC IC, preventing overvoltage damage.

By using the existing VIN pin and fault detection mechanism, the present invention extends the PFC IC's protection to include overvoltage conditions without requiring significant changes to the IC's internal design.

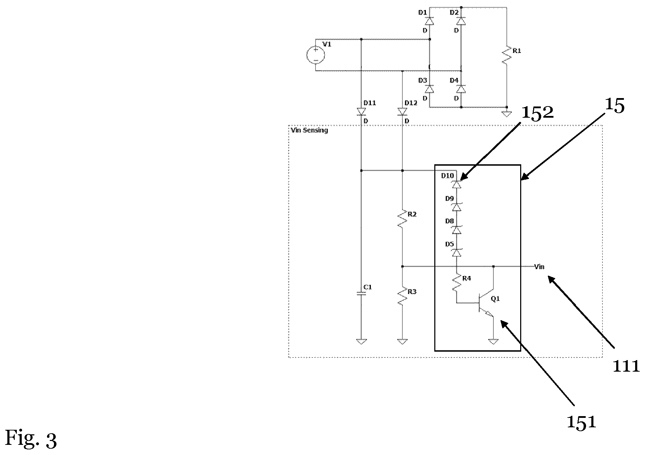

Fig. 3 illustrates a circuit diagram of an exemplary embodiment of a signal adaptation circuit 15.

In this configuration, the signal adaptation circuit 15 is highlighted and enclosed in a block, representing one possible implementation of the invention. This circuit is responsible for modifying the input signal at the input pin 111 to trigger a fault shutdown during an overvoltage condition.

Possibly, the signal adaptation circuit 15 comprises a further switch 151 arranged to pull the signal at the input pin 111 to a voltage below the minimum threshold voltage when the amplitude of the AC supply voltage exceeds the predetermined maximum value.

Optionally, the signal adaptation circuit 15 may further comprise at least one, preferably a plurality of Zener diode(s) 152 arranged between a node where the signal representing the amplitude of the AC voltage is present and the control terminal of the further switch 151.

Advantageously, these Zener diodes are configured to clamp the voltage and trigger a response when the input voltage exceeds a certain threshold. The Zener breakdown voltages may be selected to correspond to the desired maximum input voltage. When this voltage is exceeded, the Zener diodes conduct and allow current to flow through the circuit.

Optionally, the switch 151 is a transistor, preferably a FET. The transistor is switched conducting when the at least one Zener diode 152 breaks through, and arranged to pull the voltage at the input pin 111 to a ground potential (or a low voltage), simulating an undervoltage condition. Advantageously, this causes the PFC IC to interpret the signal at Vin as being below the minimum threshold (VBO), triggering the fault shutdown mechanism.

By leveraging common components such as Zener diodes 152 and a transistor 111, the PFC circuit 10 can be easily integrated into existing designs.

It should be understood that this implementation in Fig. 3 demonstrates one possible way to achieve overvoltage protection. It should be noted that different variations or alternative component choices can be used depending on the specific application requirements.

It may be noted that the PFC circuit 10 discussed in the previous embodiments may be a boost PFC circuit.

A boost PFC circuit is commonly used in LED drivers and power supplies to step up the input voltage while maintaining power factor correction. In this context, the invention enhances the protection of such boost circuits by ensuring that overvoltage conditions are managed in a simple yet effective manner. The implementation of the signal adaptation circuit in a boost PFC configuration ensures that the system remains protected against both low and high input voltages, thus improving overall system reliability and extending the life of components connected to the PFC circuit.

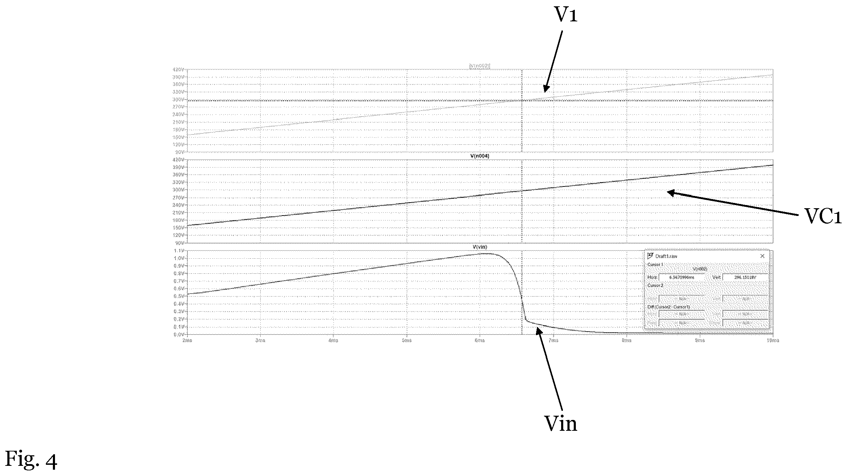

Fig. 4 illustrates the behavior of key voltages of the PCF circuit 10 shown in Fig. 3, when the input voltage increases and an overvoltage condition is detected.

Curve V1 represents the input voltage. The graph shows that the input voltage gradually increases over time. The voltage starts from around 180V and continues rising towards 400V.

Curve VC1 shows the voltage across C1 (shown in Fig. 3), which charges up to the input voltage level. As the input voltage increases, C1 charges proportionally. At first, it mirrors the increasing input voltage, but once the overvoltage threshold is reached, the behavior changes as described below.

Curve Vin is the critical Vin signal that the PFC IC uses to monitor the input voltage. At first, as the input voltage increases, Vin follows the expected rising trend, proportional to the input voltage through the voltage divider. In a particular example, at approximately 6.57ms, when the Zener diodes reach their breakdown voltage (corresponding to the desired overvoltage threshold), Vin suddenly drops to 0V (ground potential). This behavior is triggered by the activation of the transistor Q1, which pulls Vin down to ground.

Once Vin is pulled below the PFC IC's Brownout threshold (VBO), the system detects this as a fault condition, triggering the Brownout fault shutdown despite the actual issue being an overvoltage condition.

According to one aspect of the invention, a LED driver is provided, which incorporates a PFC circuit 10 designed according to the previous embodiments of the invention. The PFC circuit is responsible for regulating the input voltage to the LED driver, ensuring that the input power factor remains high while protecting against both undervoltage and overvoltage conditions.

According to a further aspect of the invention, a LED-based luminaire is provided, which includes a LED driver as described above. Advantageously, the overvoltage protection provided by the PFC circuit ensures that the luminaire operates safely even under adverse power conditions, reducing the likelihood of failure or damage to the LEDs and other sensitive components. This is particularly valuable in commercial or industrial settings where power irregularities are more common.

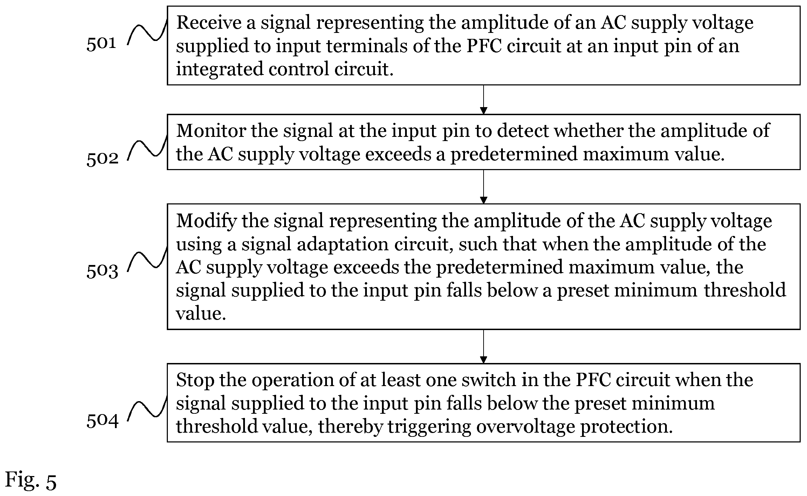

According to another aspect of the invention, a method 500 is provided for managing overvoltage protection in a PFC circuit 10 of a LED driver. Fig. 5 shows a method 500 according to an embodiment of the present invention. The method 500 comprises the following steps:
Step 501 of receiving a signal representing the amplitude of the AC supply voltage supplied to input terminals 14 of the PFC circuit 10 at an input pin 111 of an integrated control circuit 11.

Step 502 of monitoring the signal at the input pin 111 to detect whether the amplitude of the AC supply voltage exceeds a predetermined maximum value. Advantageously, the voltage level is compared against an internal threshold for overvoltage conditions.

Step 503 of modifying the signal representing the amplitude of the AC supply voltage using a signal adaptation circuit 15, such that when the amplitude of the AC supply voltage exceeds the predetermined maximum value, the signal supplied to the input pin falls below a preset minimum threshold value. Advantageously, this step pulls the signal at the VIN pin below the preset minimum threshold, simulating a Brownout condition, even though the actual fault is overvoltage.

Step 504 of stopping the operation of at least one switch in the PFC circuit when the signal supplied to the input pin falls below the preset minimum threshold value, thereby triggering overvoltage protection. This action immediately triggers the fault shutdown, thereby preventing overvoltage damage to the system.

Advantageously, the method provides a simple and efficient solution for protecting against overvoltage conditions. By using the same signal input and fault detection mechanism for both undervoltage and overvoltage protection, the method minimizes additional hardware requirements.

This leads to robust protection for the LED driver, extending its operational life and improving overall reliability, especially in environments with unstable or fluctuating power supplies.

By incorporating this method into LED drivers, the system ensures protection against both low and high input voltages, significantly improving the longevity of LED-based luminaires in critical applications.

While various embodiments of the present invention have been described above, it should be understood that they have been presented by way of example only, and not by limitation. Numerous changes to the disclosed embodiments can be made in accordance with the disclosure herein without departing from the scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. The invention is only limited by the scope of the appended claims.

## Claims

1. A power factor correction, PFC, circuit (10) for a LED driver, comprising:
an integrated control circuit (11) arranged to maintain a constant output voltage (12) of the PFC circuit (10) by controlling at least one switch (13) of the PFC circuit (10),
the integrated control circuit (11) being provided with an input pin (111), configured to be supplied with a signal representing the amplitude of an AC supply voltage supplied to input terminals (14) of the PFC circuit (10),
the integrated control circuit (11) being configured to stop the operation of the least one switch (13) when said signal falls below a preset minimum threshold value,
**characterized in that** said PFC circuit (10) further comprises:
a signal adaptation circuit (15), configured to be supplied with said signal representing the amplitude of the AC supply voltage and arranged to modify the signal supplied to the input pin (111) such that it falls below said minimum threshold value when the amplitude of the AC supply voltage exceeds a predetermined maximum value.

2. The PFC circuit (10) according to claim 1, wherein the signal adaptation circuit (15) comprises a further switch (151) arranged to pull the signal at the input pin (111) to a voltage below the minimum threshold voltage when the amplitude of the AC supply voltage exceeds the predetermined maximum value.

3. The PFC circuit (10) according to claim 2, wherein the signal adaptation circuit (15) further comprises at least one, preferably a plurality of Zener diode(s) (152) arranged between a node where the signal representing the amplitude of the AC voltage is present and the control terminal of the further switch (151).

4. The PFC circuit (10) according to claim 3, wherein the switch (151) is a transistor, preferably a field-effect transistor, FET, being switched conducting when the at least one Zener diode (152) breaks through, and arranged to pull the voltage at the input pin (111) to a ground potential.

5. The PFC circuit (10) according to any of the preceding claims, which is a boost PFC circuit.

6. LED driver comprising a PFC circuit (10) according to any of the claims 1 to 5.

7. LED based luminaire comprising a LED driver according to claim 6.

8. A method (500) for an overvoltage protection of a PFC circuit (10) of a LED driver, wherein the method comprises:
• receiving (501) a signal representing the amplitude of an AC supply voltage supplied to input terminals (14) of the PFC circuit (10) at an input pin (111) of an integrated control circuit (11),
• monitoring (502) the signal at the input pin (111) to detect whether the amplitude of the AC supply voltage exceeds a predetermined maximum value,
• modifying (503) the signal representing the amplitude of the AC supply voltage using a signal adaptation circuit, such that when the amplitude of the AC supply voltage exceeds the predetermined maximum value, the signal supplied to the input pin falls below a preset minimum threshold value,
• stopping (504) the operation of at least one switch in the PFC circuit when the signal supplied to the input pin falls below the preset minimum threshold value, thereby triggering overvoltage protection.

## Patentansprüche

1. Leistungsfaktorkorrektur(PFC)-Schaltung (10) für einen LED-Treiber, umfassend:
eine integrierte Steuerschaltung (11), die dazu eingerichtet ist, eine konstante Ausgangsspannung (12) der PFC-Schaltung (10) durch Steuern mindestens eines Schalters (13) der PFC-Schaltung (10) aufrechtzuerhalten;
wobei die integrierte Steuerschaltung (11) mit einem Eingangspin (111) versehen ist, der dazu eingerichtet ist, ein Signal zu empfangen, das die Amplitude einer den Eingangsanschlüssen (14) der PFC-Schaltung (10) zugeführten AC-Versorgungsspannung repräsentiert;
wobei die integrierte Steuerschaltung (11) dazu eingerichtet ist, den Betrieb des mindestens einen Schalters (13) zu stoppen, wenn das Signal unter einen voreingestellten Mindestschwellenwert fällt,
**dadurch gekennzeichnet, dass** die PFC-Schaltung (10) ferner umfasst:
eine Signalanpassungsschaltung (15), die dazu eingerichtet ist, mit dem die Amplitude der AC-Versorgungsspannung repräsentierenden Signal versorgt zu werden, und die dazu eingerichtet ist, das dem Eingangspin (111) zugeführte Signal derart zu modifizieren, dass es unter den Mindestschwellenwert fällt, wenn die Amplitude der AC-Versorgungsspannung einen vorbestimmten Maximalwert überschreitet.

2. PFC-Schaltung (10) nach Anspruch 1, wobei die Signalanpassungsschaltung (15) einen weiteren Schalter (151) umfasst, der dazu eingerichtet ist, das Signal am Eingangspin (111) auf eine Spannung unterhalb der Mindestschwellenspannung zu ziehen, wenn die Amplitude der AC-Versorgungsspannung den vorbestimmten Maximalwert überschreitet.

3. PFC-Schaltung (10) nach Anspruch 2, wobei die Signalanpassungsschaltung (15) ferner mindestens eine Zenerdiode (152), vorzugsweise eine Vielzahl von Zenerdioden (152), umfasst, wobei die mindestens eine Zenerdiode (152) zwischen einem Knoten, an dem das die Amplitude der AC-Spannung repräsentierende Signal anliegt, und dem Steueranschluss des weiteren Schalters (151) angeordnet ist.

4. PFC-Schaltung (10) nach Anspruch 3, wobei der Schalter (151) ein Transistor, vorzugsweise ein Feldeffekttransistor, FET, ist, der leitend geschaltet wird, wenn die mindestens eine Zenerdiode (152) durchbricht, und der dazu eingerichtet ist, die Spannung am Eingangspin (111) auf ein Massepotential zu ziehen.

5. PFC-Schaltung (10) nach einem der vorhergehenden Ansprüche, welche eine Hochsetz-PFC-Schaltung ist.

6. LED-Treiber, umfassend eine PFC-Schaltung (10) nach einem der Ansprüche 1 bis 5.

7. LED-basierte Leuchte, umfassend einen LED-Treiber nach Anspruch 6.

8. Verfahren (500) zum Überspannungsschutz einer PFC-Schaltung (10) eines LED-Treibers, wobei das Verfahren umfasst:
Empfangen (501) eines Signals, das die Amplitude einer den Eingangsanschlüssen (14) der PFC-Schaltung (10) zugeführten AC-Versorgungsspannung repräsentiert, an einem Eingangspin (111) einer integrierten Steuerschaltung (11);
Überwachen (502) des Signals am Eingangspin (111), um zu erfassen, ob die Amplitude der AC-Versorgungsspannung einen vorbestimmten Maximalwert überschreitet;
Modifizieren (503) des die Amplitude der AC-Versorgungsspannung repräsentierenden Signals mittels einer Signalanpassungsschaltung derart, dass, wenn die Amplitude der AC-Versorgungsspannung den vorbestimmten Maximalwert überschreitet, das dem Eingangspin zugeführte Signal unter einen voreingestellten Mindestschwellenwert fällt;
Stoppen (504) des Betriebs mindestens eines Schalters in der PFC-Schaltung, wenn das dem Eingangspin zugeführte Signal unter den voreingestellten Mindestschwellenwert fällt, wodurch der Überspannungsschutz ausgelöst wird.

## Revendications

1. Circuit de correction du facteur de puissance, PFC, (10) pour un pilote de LED, comprenant :
un circuit de commande intégré (11) agencé pour maintenir une tension de sortie constante (12) du circuit PFC (10) en commandant au moins un commutateur (13) du circuit PFC (10) ;
le circuit de commande intégré (11) étant pourvu d'une broche d'entrée (111) configurée pour recevoir un signal représentant l'amplitude d'une tension d'alimentation CA fournie à des bornes d'entrée (14) du circuit PFC (10) ;
le circuit de commande intégré (11) étant configuré pour arrêter le fonctionnement de l'au moins un commutateur (13) lorsque ledit signal tombe au-dessous d'une valeur de seuil minimale préréglée, **caractérisé en ce que** ledit circuit PFC (10) comprend en outre: un circuit d'adaptation de signal (15), configuré pour recevoir ledit signal représentant l'amplitude de la tension d'alimentation CA et agencé pour modifier le signal fourni à la broche d'entrée (111) de telle sorte qu'il tombe au-dessous de ladite valeur de seuil minimale lorsque l'amplitude de la tension d'alimentation CA dépasse une valeur maximale prédéterminée.

2. Circuit PFC (10) selon la revendication 1, dans lequel le circuit d'adaptation de signal (15) comprend un autre commutateur (151) agencé pour amener le signal au niveau de la broche d'entrée (111) à une tension inférieure à la tension de seuil minimale lorsque l'amplitude de la tension d'alimentation CA dépasse la valeur maximale prédéterminée.

3. Circuit PFC (10) selon la revendication 2, dans lequel le circuit d'adaptation de signal (15) comprend en outre au moins une diode Zener (152), de préférence une pluralité de diodes Zener (152), l'au moins une diode Zener (152) étant agencée entre un nœud auquel le signal représentant l'amplitude de la tension CA est présent et la borne de commande de l'autre commutateur (151).

4. Circuit PFC (10) selon la revendication 3, dans lequel le commutateur (151) est un transistor, de préférence un transistor à effet de champ, FET, qui est rendu conducteur lorsque l'au moins une diode Zener (152) entre en claquage, et est agencé pour amener la tension au niveau de la broche d'entrée (111) à un potentiel de masse.

5. Circuit PFC (10) selon l'une quelconque des revendications précédentes, lequel est un circuit PFC élévateur.

6. Pilote de LED comprenant un circuit PFC (10) selon l'une quelconque des revendications 1 à 5.

7. Luminaire à LED comprenant un pilote de LED selon la revendication 6.

8. Procédé (500) de protection contre les surtensions d'un circuit PFC (10) d'un pilote de LED, dans lequel le procédé comprend :
la réception (501), au niveau d'une broche d'entrée (111) d'un circuit de commande intégré (11), d'un signal représentant l'amplitude d'une tension d'alimentation CA fournie à des bornes d'entrée (14) du circuit PFC (10);
la surveillance (502) du signal au niveau de la broche d'entrée (111) pour détecter si l'amplitude de la tension d'alimentation CA dépasse une valeur maximale prédéterminée;
la modification (503) du signal représentant l'amplitude de la tension d'alimentation CA au moyen d'un circuit d'adaptation de signal, de telle sorte que, lorsque l'amplitude de la tension d'alimentation CA dépasse la valeur maximale prédéterminée, le signal fourni à la broche d'entrée tombe au-dessous d'une valeur de seuil minimale préréglée;
l'arrêt (504) du fonctionnement d'au moins un commutateur dans le circuit PFC lorsque le signal fourni à la broche d'entrée tombe au-dessous de la valeur de seuil minimale préréglée, déclenchant ainsi une protection contre les surtensions.
